# EUROPEAN PATENT SPECIFICATION

(11) **EP 1 975 085 B1**
(45) Date of publication and mention of the grant of the patent: **13.04.2016**
(21) Application number: 08012333.4
(22) Date of filing: 01.09.2005
(51) Int. Cl.: B29C 65/00, B29C 65/02, B65D 3/22, B65D 81/38, B29C 65/78, B29K 711/12, B29L 9/00, B29L 24/00, B29L 31/00

(54) **Method of fabricating an insulating container**
Verfahren zur Herstellung eines Isolierbehälters
Procédé de fabrication d'un conteneur isolé

(30) Priority: 15.04.2005 US 672195 P
(43) Date of publication of application: 01.10.2008
(62) Divisional of application: 05019031.3
(73) Proprietor: SEDA INTERNATIONAL PACKAGING GROUP SPA, 80022 Arzano Napoli (IT)
(72) Inventor: D'Amato, Gianfranco, 80022 Arzano Napoli (IT)
(74) Representative: Grünecker Patent- und Rechtsanwälte PartG mbB

(56) References cited:
- EP-A- 1 031 514
- WO-A-03/057577
- DE-U1- 20 110 390
- JP-A- H0 497 833
- US-A- 4 007 670
- US-A- 4 344 814
- US-A- 5 460 323
- PATENT ABSTRACTS OF JAPAN vol. 2002, no. 02, 2 April 2002 (2002-04-02) -& JP 2001 293802 A (TOPPAN PRINTING CO LTD), 23 October 2001 (2001-10-23)
- PATENT ABSTRACTS OF JAPAN vol. 2000, no. 07, 29 September 2000 (2000-09-29) -& JP 2000 103479 A (DAINIPPON PRINTING CO LTD), 11 April 2000 (2000-04-11)
- PATENT ABSTRACTS OF JAPAN vol. 2000, no. 07, 29 September 2000 (2000-09-29) -& JP 2000 103478 A (DAINIPPON PRINTING CO LTD), 11 April 2000 (2000-04-11)
- PATENT ABSTRACTS OF JAPAN vol. 2002, no. 02, 2 April 2002 (2002-04-02) -& JP 2001 294282 A (FUJI SEAL INC), 23 October 2001 (2001-10-23)

## Description

The invention generally relates to containers. It relates particularly to a method of fabricating such containers.

There are many examples in the prior art of containers with insulation features for use with hot liquids such as coffee, tea, soups and the like. Examples may be found in US-A-2,266,828, US-A-4,007,670, US-A-5, 145,107, US-A-5,460,323, US-A-5,524,817, US-A-5,685,480, and US-A-6,663,926. Each of these containers includes an inner cup and an outer shell separated by an air gap. In modern containers of this type the cup is fabricated of thin paperboard coated inside with a polyethylene resin or the like. The cup and shell are fastened together by gluing them at top and bottom. The air gap between the cup body wall and the shell may be maintained by spacers of varying configuration.

JP 2001 29 3802 discloses a heat insulating cup consisting of a paper cup main body and a paper cup cylindrical body. On inside and outside surfaces of the main body, a polyolefinic resin film is coated. Moreover, the heat seal varnish is additionally provided between a curl part of the cylindrical body and an outside surface of the main body. This varnish is used for bonding and fixing the main body and cylindrical body.

### Summary of the invention

According to the invention, there is provided a method of fabricating an insulating container for hot drinks or the like having the features of claim 1. It comprises providing a generally frustoconical shell and a generally frusto-conical cup body, the entire inner surface of the shell having a thermo-sealable plastic coating thereon and bonding the cup body and the shell by:
- heating the thermo-sealable plastic coating to its melting point;
- inserting said cup body into said shell until an outside surface of the cup body seats in the shell;
- locating a first member with at least one radially displaceable pressing member and a second member on opposite sides of the shell and cup body; and
- displacing said pressing member towards said second member to press the shell and cup wall together with sufficient pressure to form a bond between the shell and cup wall.

The shell and cup body are pressed together at a plurality of locations to form a plurality of discrete bonding spots and/or bonding areas. In one embodiment, the method includes forming the shell into said frusto-conical shape from paperboard coated on its inner surface with said plastic coating. In one embodiment, the pressing member moves radially outwardly towards the second member, which is located outside of the shell to thereby press the cup body and shell together.

The thermo-sealable plastic coating provided on the inside of said shell is heated, and thereafter the cup is seated within the shell and bonding spots and/or bonding ares for bonding said shell to said cup body by the plastic coating are only locally formed within a "contact path". This "contact path" is generally where the outer surface of the cup body and the inner surface of the shell will typically be in contact when the cup is seated within the shell. However, it is not necessary that there is an actual contact between the corresponding walls of the shell and cup body along the entire circumference, but the contact path may only extend partially along the circumference wherein within this contact path corresponding bonding spots and/or bonding areas are located. The bonding spots and/or boding areas are formed by a method wherein shell and cup wall are pressed together at such bonding spots and/or such bonding areas within said contact path.

As the thermo-sealable plastic coating is melted prior to inserting the cup in the shell they will be bonded in the corresponding bonding spots and/or bonding areas by this coating after it has cooled and hardened.

The contact path may be an annular path which also may completely encircle the cup body and shell and may have a selected width in the vertical direction, that is, perpendicular to the corresponding horizontal or circumferential direction.

To securely fix the cup body and shell to each other a number of bonding spots and/or bonding areas formed along the contact path, all separated from each other by bonding free parts of said contact path is provided Moreover, the bonding spots and/or bonding areas may be arranged side-by-side and separated from each other in the horizontal and/or vertical direction within the contact path. This means that single bonding spots or bonding areas are separated in the horizontal or vertical direction or that a group of such bonding spots or bonding areas are arranged in a vertical direction and that such groups are then arranged side-by-side in the horizontal or circumferential direction.

It is possible to provide the corresponding bonding spots and/or bonding areas unevenly distributed in circumferential direction. To improve the assembly of the container and also the corresponding method of fabricating it may be advantageous if the corresponding spots or areas are evenly distributed.

The insulated container has a gap between the cup wall and the shell wall in a lower section of the container and generally the air gap should be maintained without any heat transferring connections. Consequently, in one embodiment, the contact path is formed between an annular upper wall section of the cup body and an upper essentially cylindrical section of said shell. In this part of the container a corresponding gap is not necessary as the contact path is arranged higher than the level of the beverage filled in the container.

It is also possible to arrange said bonding spots and/or bonding areas immediately adjacent to the lower edge of said annular upper wall section of the cup body, where an upper shoulder is formed. Below this upper shoulder the gap will start.

Different materials may be selected for the shell or cup wherein also at least one of those may be made of a plastic material. For recycle reasons it is also possible that the cup and/or the shell may be made of paperboard. To obtain sufficient fluid imperviousness of at least the cup, the paperboard for forming the cup is preferably coated with the above mentioned polyethylene resin or the like. Of course, the thermo-sealable plastic coating may be provided on the outside of the cup wall, the inside of the shell wall or also may be arranged on both of those walls.

The corresponding bonding spots or bonding areas may have different shapes. For example, bonding spots may have a circular, rectangular or other cross-section. The corresponding bonding areas may have the form of short stripes, wherein the stripes may be horizontally arranged or may also be inclined with respect to circumferential direction.

For melting the plastic coating it is sufficient to only heat the coating at the location or locations where the bonds are to be formed but it is also possible to, for example, heat an entire annular strip of the plastic coating.

For obtaining sufficient force to press the cup wall and shell wall together until the thermo-sealable plastic coating is again hardened, an annular first member with at least one radially displaceable or protruding pressing element is positioned inside the cup body, which pressing element presses against an external second member to press the walls of cup body and shell together by both members to form the bonding spots and/or bonding areas. It is of course also possible that pressing elements are provided by both members.

It is also possible that such pressing elements are not in direct contact with one of the walls of the container but that they deform, for example, an annular and flexible ring from its inside and that this ring will deform to press the walls of the cup body and shell together by cooperation with the other member.

An apparatus for bonding the outer shell and inner cup to form an insulated container for hot liquids comprises such a first member to be arranged within the cup body, such second member generally concentric with said first member and arranged outside the outer shell, and at least one radially protruding or movable pressing member to press the opposed shell and cup walls together to form the bonding spots and/or bonding areas along the circumference of the shell and the cup body.

The first member may be an annular ring or a disk that is inserted within the cup body. This annular ring or disk may support the corresponding pressing member or members such that they are moveable in a radial direction.

A simple embodiment of such a movable pressing member is a plunger movably supported by said first or first and second members.

To obtain evenly distributed discrete bonding spots or bonding areas along the contact path the corresponding number of radially movable pressing elements may also be evenly distributed along the circumference of the first member.

To support the shell prior to insertion of the cup body it is advantageous that the apparatus comprise a receiving member with at least a skirt portion and an upper flange used for holding the shell.

To use the receiving member also as a second or external member it is possible that a counter pressing extension extends from the upper flange of the receiving member in an essentially vertical direction. Then the corresponding moveable pressing members may be part of the first or annular member and the extension will form the second member.

It is also possible to use the receiving member for holding the cup body in a predetermined position in which an upper end of the counter pressing extension forms as a seat for the outward curl of the cup body.

The invention, including its method of manufacture is illustrated more or less diagrammatically in the drawings, in which:
FIGURE 1 is a side view of an insulated container comprising an inner cup body, an outer shell;
FIGURE 2 is a bottom plan view of the container of Figure 1;
FIGURE 3 is a side cross-section view of the container in Figure 1;
FIGURE 4 is an enlarged, side cross-section view through the top of the shell of the container of Figure 1, showing a first container assembly step;
FIGURE 5 is a view similar to Figure 4 after insertion of the cup body in the shell;
FIGURE 6 is a view similar to Figure 4 showing spot welding of the shell and cup in a further container assembly step;
FIGURE 7 is a top plan view of the container and a corresponding tool or apparatus for spot welding;
FIGURE 8 is a perspective view of a container matted with the tool of Figure 7 for spot welding;

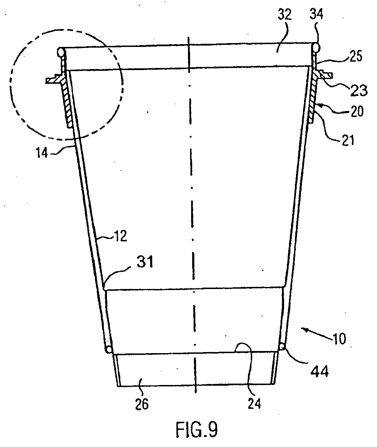

FIGURE 9 is a view similar to Figure 3 of an insulated container embodying a second form;
FIGURE 10 is a view similar to Figure 4 of the second container embodiment showing the first assembly step;
FIGURE 11 is a view similar to Figure 5 of the second container embodiment in a further assembly step, and
FIGURE 12 is a view similar to Figure 6 of the second container embodiment showing a further assembly step.

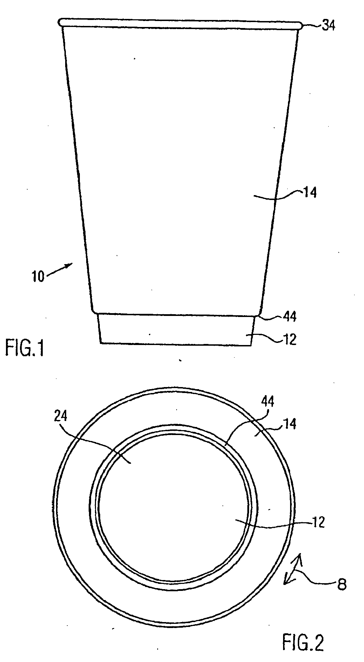

Referring now to the drawings, in particular to Figures 1 to 3, a hot drink container is illustrated generally at 10. The container includes an inner cup body 12 and an outer shell 14 telescoped together such that the cup body nests within the shell and the cup body and shell are spot bonded to each other according to the present invention.

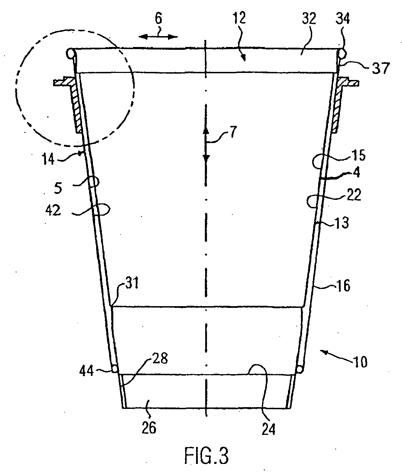

As shown in Figure 3 the inner cup body 12 includes a frusto-conical cup wall 22 and a cup bottom 24, separately formed of paperboard in a conventional manner. Prior to fabrication, the paperboard is coated on at least one side with thermo-sealable plastic material such as polyethylene or the like. The assembled cup body 12 then has an internal coating of polyethylene over all or a portion of its internal surface.

The cup wall 22 has an annular shoulder 31 formed inwardly from it near the cup bottom 24. The shoulder 31 acts as a stop for the next cup above when cups are stacked.

The cup bottom 24 is seated in the wall 22 in the manner illustrated. A segment 26 of the lower edge of the cup wall 22 is folded inwardly and upwardly to engage an annular, downwardly extending skirt section 28 of the cup bottom 24.

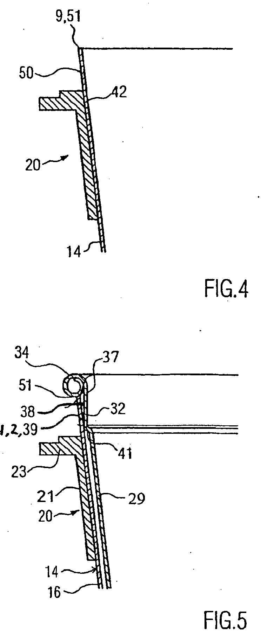

The cup wall 22 also has an annular outwardly stepped upper shoulder at a distance of 5 mm or more downwardly from an outward curl 34 which forms an upper edge of the body. Between shoulder 32 and curl 34 an upper wall section 37 with an annular outer surface 38 is arranged with a lower portion 39 of the surface 38, at shoulder's edge 41, which serves as a bonding spot or bonding area 1 or 2 to which the annular inner surface of the shell 14 is bonded, in a manner hereinafter discussed. This is clearly shown in Figure 5.

The outer shell 14 is, like the cup wall 22, frusto-conical in shape. The shell 14 is formed from paperboard and has an internal coating 42 of a thermo-sealable plastic material. The internal coating is over the entire inner surface of the shell. The shell 14 has an inward curl 44, see Figure 3, formed on its lower edge, and this inward curl engages the outer surface 4 of the cup wall 22 above the lower end of the cup 12 at a distance corresponding approximately to the height of the cup bottom 24.

A contact path 3 is defined near the upper edge of the body 22 at the region of contact between the inner surface of the shell 14 and the outer surface of the cup wall 22. Bonding of the shell 14 to the cup wall 22 is effected in this contact path 3 in the manner described below.

An annular upper edge 9 or 51, see also Figure 5, of shell 14 is immediately adjacent the curl 34 of the cup body 12 and may abut same from below. The shell 14 extends downwardly from there to a narrow, annular surface where it engages at least partially the annular outer surface 38 of the upper wall section 37 at and slightly above the lower edge 41 of the shoulder 32.

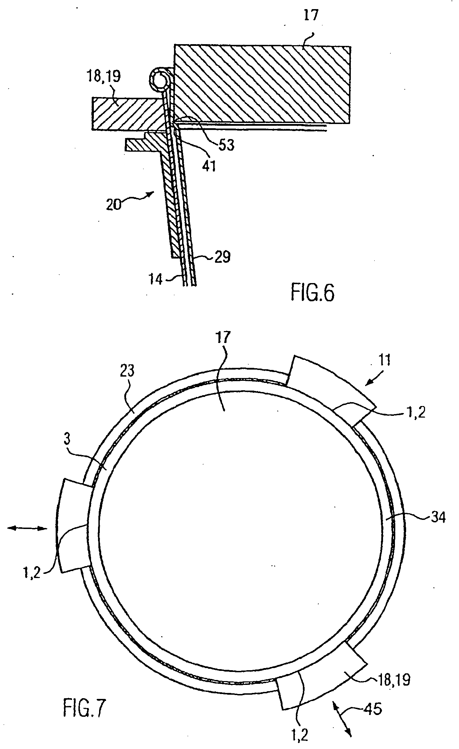

The thermo-sealable plastic coating 42 inside the shell 14 is locally melted before the cup 12 and shell 14 are assembled. After assembly the shell 14 is thermally bonded at bonding spots or bonding areas 1, 2 which are located within the contact path 3. This is illustrated, for example, in Figure 6 as the spot weld 53, where the shell is bonded to the cup body shoulder 32 or the annular outer surface 38 adjacent its lower edge 41. Typically this will be at a distance of about 5 mm from the curl 34. Although the use of three spot welds 53 annually spaced at regular intervals is described there may be more than three spot welds, and they may not be evenly spaced.

It is also possible to arrange a number of such bonding spots or bonding areas above each other in vertical direction 7, see Figure 3, or side-by-side in horizontal direction 6 or circumferential direction 8, see Figure 2.

Referring now to Figures 4 to 8, container 10 is fabricated in the following steps:
- the shell 14 is fabricated of paperboard, which is selectively coated internally with a thermo-sealable plastic material such as polyethylene, and is formed around a frusto-conical mandrel;
- the shell is then removed from the mandrel and seated inside a corresponding shaped receiver or receiving member 20, see Figure 4. This receiving member 20 comprises a frusto-conical skirt portion 21, see Figure 5, which supports the outer surface of the shell wall 16. At the upper end of the skirt portion 21 the receiving member 20 has a radially outwardly extending upper flange 23.

In a next step an annular heating element is positioned against the inside of the shell 14 and strips or areas of the polyethylene coating are heated to its melting point, see Figure 6.

A previously assembled cup 12 is then drawn by suction into the shell until the annular periphery of its upper shoulder 32 seats against the inner wall of the shell at the melted area along the contact path 3, see also Figure 7.

An annular disk 17 as a first member of an apparatus 11 for fabricating the corresponding container 10 is then positioned inside the cup body 12 and snugly engages the inner surface of the cup wall 22 above the upper shoulder 32, see for example Figures 6 to 8.

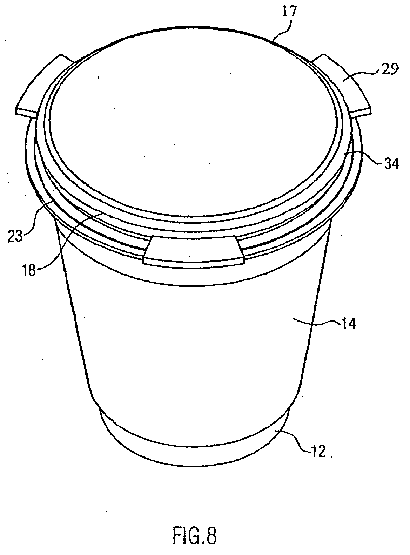

An annular ring 18 as a second member of the apparatus 11 incorporating three radially extendable plungers as pressing members 19 is then placed around the shell 14 at the level of the melted strip and the plungers are extended to press the shell and cup walls together, see for example Figure 6, until they bond together,at, for example, three spot welds 53 or bonding spots 1 or bonding areas 2. See also Figures 7 and 8.

Disk and ring are then removed and the assembled container is ejected from the receiving member 20.

It is not necessary that the upper wall section 37 of the cup body is contacted by the entire upper end section of the shell wall 16 and it is possible that a gap is provided between both just below outward curl 34. Only along the contact path 3, see Figure 7, which is for example arranged adjacent to the upper annular shoulder 32 corresponding bonding spots or bonding areas will the shell and cup body be in contact. This contact may be enhanced by pressing first member 17 and second member 18 together, see Figures 6 and 7, as discussed above.

In Figure 8, and also Figure 7, the ring-like second member 18 with the plunger 19 is illustrated wherein it is arranged between the upper surface of upper flange 23 of receiving member 20 and the lower end of outward curl 34, see again Figure 6.

In Figure 7 it is also illustrated that the corresponding plungers, that is pressing members 19, are evenly distributed in a circumferential direction 8 around container 10 and that three bonding spots or bonding areas are formed. The corresponding three pressing members 19 are movable in radial displacement direction 45.

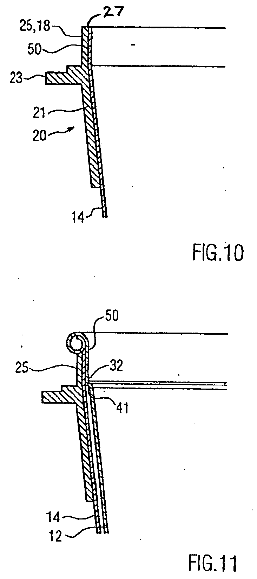

Referring now to Figures 10 to 12, a container embodying features of a second embodiment is seen generally at 10 in various stages of assembly. The container is identical in construction to the previous described container 10, except for one feature. The cup body 12 of the container is identical to the previously described cup body but shell 14 has a short cylindrical section 50 formed at its upper end. This cylindrical section 50 of shell 14 seats flush against the outer surface 38 of upper wall section 37 of the cup body, see also the previous figures. Cup 12 and shell 14 are spot bonded together at spots 53 as bonding spots 1 or bonding areas 2 around shoulder 32 immediately adjacent to the lower edge 41 of cylindrical section 50. Although a cylindrical section 50 seats flush against cup 12 above shoulder 32, it should be understood that the cylindrical section 50 is not bonded to the cup body at locations other than the ring of discrete spot bonds 53. Also, the spot bonds or spot welds 53 are separated from each other by bonding-free parts along the contact path 3.

The receiving member 20 of the second embodiment is different form the first embodiment in that it has an integrally formed second member 18 which is formed by counter pressing extension 25 which extends up vertically from an upper edge of flange 23 of the receiving member 20. An upper end face 27 of extension 25 abuts the curl 34 from below.

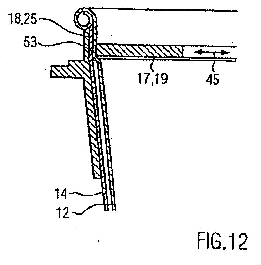

The cup 10 is fabricated according to the invention in the following steps:
- the shell is fabricated of paperboard which is selectively coated internally with the thermo-sealable plastic material such as polyethylene, by forming around a frusto-conical mandrel having an upper, circular cylindrical section;
- the shell 14 is then removed from the mandrel and seated inside the corresponding shaped receiving member 20, see Figure 10;
- an annular heating element is positioned against the inside of the shell 14 and a strip of the polyethylene coating is heated to its melting temperature;
- a previously assembled cup body 12 is then drawn by suction into the shell 14 until the annular periphery of the shoulder 31 of the cup body 22 seats along a contact path 3 against the shell at the melted strip, see Figure 11;
- an annular ring as a first member 17, see Figure 12, incorporating for example three radially extendable plungers as pressing members 19 is then positioned inside the cup body 12 at the level of the melted strip and the plungers are extended outwardly to press shell and cup wall together against the external receiving member 20 and in particular against the corresponding counter pressing extension 25 until they are bonded together at, for example, three spot welds 53, see Figure 12;
- the ring 17 is then removed and container 10 is ejected from the receiving member 20.

Each container embodiment herein before described is characterized by having a thermo-sealable plastic coating inside of its shell 14 bonded to the outer surface of a cup 12 by heat and pressure at a plurality of discrete spot welds 53 which may be bonding spots 1 or bonding areas 2. The corresponding spot welds extend around and between those components. Those spot welds lie in an annular path, referred to herein as the contact path 3, adjacent the lower edge of an upper wall section 37 of the cup body or upper cylindrical section 50 of the shell 14.

## Claims

1. A method of fabricating an insulating container for hot drinks or the like, comprising:
providing a generally frusto-conical shell (14) and a generally frusto-conical cup body (22), wherein a thermo-sealable plastic coating (42) is coated over the entire inner surface of the shell (14), and
bonding the cup body (22) and the shell (14) by:
- heating the thermo-sealable plastic coating (42) to its melting point:
- inserting said cup body (22) into said shell (14) until an outside surface of the cup body seats against the inner surface of the shell along a contact path (3), so that the melted thermo-sealable plastic coating (42) extends at least along said contact path (3)
- locating a first member (17) with at least one radially displaceable pressing member (19) inside the cup body and a second member (18) on an opposite side of the shell and cup body; and
- displacing said pressing member (19) towards said second member (18) to press the shell (14) and cup wall (13) together with sufficient pressure to cause the melted thermo-sealable plastic coating to form a bond between the shell and cup wall, which bond is only localized within said contact path (3), formed between cup body and shell, wherein the shell (14) and cup body (22) are pressed together at a plurality of locations to form a plurality of discrete bonding spots (1) and/or bonding areas (2), along the contact path (3), all separated from each other by bonding-free parts of said contact path (3).

2. The method according to claim 1, including forming the shell (14) into said frusto-conical shape from paperboard coated on its entire inner surface with said plastic coating (42).

3. The method according to claim 1 or 2, wherein the pressing member (19) moves radially outwardly towards the second member (18), which is located outside of the shell (14) to thereby press the cup body (22) and shell together.

## Patentansprüche

1. Verfahren zur Herstellung eines isolierenden Behälters für Heißgetränke oder dergleichen, welcher umfasst:
- Bereitstellen einer im Allgemeinen kegelstumpfförmigen Hülle (14) und eines im Allgemeinen stumpfförmigen Becherkörpers (22), wobei ein heißsiegelförmiger Kunststoff (42) auf der gesamten inneren Oberfläche der Hülle (14) aufgetragen und
- Verbinden des Becherkörpers (22) und der Hülle (14) durch:
- Erhitzen des heißsiegelfähigen Kunststoffüberzugs (42) bis zum Schmelzpunkt;
- Einsetzen des Becherkörpers (22) in die Hülle (14) bis eine äußere Oberfläche des Becherkörpers an einer inneren Oberfläche der Hülle entlang eines Kontaktweges (3) anliegt, sodass sich der geschmolzene heißsiegelförmige Kunststoffüberzug (42) wenigstens entlang des Kontaktweges (3) erstreckt;
- Positionieren eines ersten Bauteils (17) mit wenigstens einem radial verstellbaren Presselement (19) innerhalb des Becherkörpers und eines zweiten Bauteils (18) auf einer gegenüberliegenden Seite von Hülle und Becherkörper, und
- Verstellen des Presselements (19) in Richtung zum zweiten Bauteil (18), um Hülle (14) und Becherwand (13) mit ausreichendem Druck zusammenzudrücken, um eine Verbindung durch den geschmolzenen heißsiegelfähigen Kunststoffüberzug zwischen Hülle und Becherwand herzustellen, welche Verbindung nur lokal innerhalb des Kontaktweges (3) gebildet zwischen Becherkörper und Hülle vorgesehen ist, wobei die Hülle (14) und der Becherkörper (22) an einer Vielzahl von Stellen zusammengepresst werden, um eine Vielzahl diskreter Klebepunkte (1) und/oder Klebebereiche (2) entlang des Kontaktweges (3) zu bilden, welche alle voneinander durch klebefreie Teile des Kontaktweges (3) getrennt sind.

2. Verfahren nach Anspruch 1, wobei die Hülle (14) in eine kegelstumpfförmige Form aus einem Karton hergestellt wird, der auf seiner gesamten inneren Oberfläche mit dem Kunststoffüberzug versehen ist.

3. Verfahren nach Anspruch 1 oder 2, wobei das Presselement (19) sich radial nach außen in Richtung zum zweiten Bauteil (18) bewegt, welches außerhalb der Hülle (14) angeordnet ist, um dadurch Becherkörper (22) und Hülle aneinanderzupressen.

## Revendications

1. Procédé de fabrication d'un récipient isolé pour boissons chaudes ou similaires, comprenant :
la fourniture d'une coque généralement tronconique (14) et d'un corps de tasse généralement tronconique (22), dans lequel un revêtement plastique thermosoudable (42) est revêtu sur l'entièreté de la surface interne de la coque (14), et
la liaison du corps de tasse (22) à la coque (14) par :
- chauffage du revêtement plastique thermosoudable (42) jusqu'à son point de fusion ;
- insertion dudit corps de tasse (22) dans ladite coque (14) jusqu'à ce qu'une surface extérieure du corps de tasse s'appuie contre la surface interne de la coque le long d'un chemin de contact (3), de telle sorte que le revêtement plastique thermosoudable fondu (42) s'étend au moins le long dudit chemin de contact (3) ;
- positionnement d'un premier élément (17) avec au moins un élément de compression déplaçable radialement (19) dans le corps de tasse et d'un deuxième élément (18) sur un côté opposé de la coque et du corps de tasse ; et
- déplacement dudit élément de compression (19) vers ledit deuxième élément (18) pour presser l'une contre l'autre la coque (14) et la paroi de tasse (13) avec une pression suffisante pour provoquer la formation d'une liaison par le revêtement plastique thermosoudable fondu entre la coque et la paroi de tasse, ladite liaison étant seulement positionnée au sein dudit chemin de contact (3), formé entre le corps de tasse et la coque, dans lequel la coque (14) et le corps de tasse (22) sont pressés l'un contre l'autre à une pluralité de positions pour former une pluralité de points de liaison discrets (1) et/ou de zones de liaison (2), le long du chemin de contact (3), tous séparés entre eux par des parties non collées dudit chemin de contact (3).

2. Procédé selon la revendication 1, comprenant la formation de la coque (14) selon ladite forme tronconique à partir de carton revêtu sur l'entièreté de sa surface interne par ledit revêtement plastique (42).

3. Procédé selon la revendication 1 ou 2, dans lequel l'élément de compression (19) se déplace radialement vers l'extérieur vers le deuxième élément (18), qui est positionné à l'extérieur de la coque (14) pour ainsi presser l'un contre l'autre le corps de tasse (22) et la coque.
